(19) Europäisches Patentamt / European Patent Office / Office européen des brevets

(11) **EP 4 773 208 A1**

(12) **EUROPEAN PATENT APPLICATION**

(43) Date of publication:
08.07.2026 Bulletin 2026/28

(21) Application number: 26150122.5

(22) Date of filing: 05.01.2026

(51) International Patent Classification (IPC):
$H01M\ 4/131$ (2010.01)    $H01M\ 4/136$ (2010.01)
$H01M\ 4/525$ (2010.01)    $H01M\ 4/58$ (2010.01)

(52) Cooperative Patent Classification (CPC):
H01M 4/525; H01M 4/131; H01M 4/136;
H01M 4/5825; H01M 2004/028

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 06.01.2025 KR 20250001400

(71) Applicant: SAMSUNG SDI CO., LTD.
Yongin-si, Gyeonggi-do 17084 (KR)

(72) Inventors:
• NAM, HYUN
17084 Gyeonggi-do (KR)
• PARK, JINSEOK
17084 Gyeonggi-do (KR)
• LEE, MINHO
17084 Gyeonggi-do (KR)
• YEOU, JUNGOCK
17084 Gyeonggi-do (KR)
• PARK, JEONGJOO
17084 Gyeonggi-do (KR)

(74) Representative: Michalski Hüttermann & Partner mbB
Kaistraße 16A
40221 Düsseldorf (DE)

(54) **POSITIVE ELECTRODE FOR RECHARGEABLE LITHIUM BATTERY, AND RECHARGEABLE LITHIUM BATTERY INCLUDING THE SAME**

(57) The present disclosure relates to a positive electrode for a rechargeable lithium battery. The positive electrode includes a positive electrode current collector and a positive electrode active material layer formed on at least one surface of the positive electrode current collector. The positive electrode active material layer includes a first positive electrode active material layer in contact with the positive electrode current collector, and a second positive electrode active material layer disposed on the first positive electrode active material layer. The first positive electrode active material layer includes a first positive electrode active material and the second positive electrode active material layer includes a second positive electrode active material. The DA (Degree of Alignment) value of the second positive electrode active material $DA_2$ is greater than the DA value of the first positive electrode active material $DA_1$.

FIG. 1

**Description**

CROSS-REFERENCE TO RELATED APPLICATION

The present application claims priority to Korean Patent Application No. 10-2025-0001400, filed on January 6, 2025, the entire content of which is hereby incorporated by reference.

BACKGROUND

The present disclosure relates to a positive electrode for a rechargeable lithium battery and a rechargeable lithium battery including the positive electrode.

The increasing presence of battery-powered electronics, such as, e.g., mobile phones, laptop computers, electric vehicles, and the like, has driven a rise in demand for rechargeable batteries provided with high energy density and high capacity. Accordingly, improving the performance of rechargeable lithium batteries may be advantageous.

Rechargeable lithium batteries include a positive electrode and a negative electrode, each including an active material that allows intercalation and deintercalation of lithium ions, and an electrolyte solution, and produce electrical energy from redox reactions that take place as lithium ions are intercalated into or deintercalated from the positive electrode and the negative electrode.

SUMMARY

The present disclosure includes a positive electrode for a rechargeable lithium battery capable of improving ion conductivity, life characteristics, and rapid charging performance.

The present disclosure describes a rechargeable lithium battery with reduced internal resistance, enhanced rapid-charging performance, and improved lifespan and capacity characteristics.

An example embodiment of the present disclosure may include a positive electrode for a rechargeable lithium battery, including a positive electrode current collector, and a first positive electrode active material layer disposed on at least one surface of the positive electrode current collector.

The positive electrode active material layer may include a first positive electrode active material layer in contact with the positive electrode current collector, and a second positive electrode active material layer disposed on the first positive electrode active material layer.

The first positive electrode active material layer may include a first positive electrode active material containing nickel and a first binder, and the second positive electrode active material layer includes a second positive electrode active material and a second binder. The positive electrode may satisfy Formula 1 below, and a value of $DA_2$ may be in a range of $\geq$ 48 to $\leq$ 60.

$$\text{Formula 1:}$$

$$DA_2 > DA_1$$

In Formula 1, $DA_1$ may represent a DA (Degree of Alignment) value of the first positive electrode active material layer, and $DA_2$ may represent a DA value of the second positive electrode active material layer. These values are each calculated in accordance with Formula 2 below.

$$\text{Formula 2:}$$

$$DA \ (\text{Degree of Alignment}) = (I_b/I_{total}) \ \text{x} \ 100$$

In Formula 2, $I_b$ may represent a sum of peak intensities observed along a b-axis, which corresponds to crystal direction in which lithium ions move, measured using CuK$\alpha$ radiation during XRD analysis. $I_{total}$ may represent a sum of peak intensities observed within 20 range from 10° to 65°, measured using CuK$\alpha$ radiation during XRD analysis.

An example embodiment of the present disclosure includes a rechargeable lithium battery comprising the positive electrode as described above, and a negative electrode.

BRIEF DESCRIPTION OF DRAWINGS

FIG. 1 illustrates a rechargeable lithium battery according to an example embodiment of the present disclosure.

FIG. 2 shows a cylindrical rechargeable lithium battery according to another example embodiment of the present disclosure.

FIG. 3 shows a prismatic rechargeable lithium battery according to another example embodiment of the present disclosure.

FIGS. 4 and 5 each show a pouch-type rechargeable lithium battery according to another example embodiment of the present disclosure.

FIG. 6 is a cross-sectional view showing a rechargeable lithium battery according to an example embodiment of the present disclosure.

FIG. 7 is an enlarged schematic cross-sectional view showing the M region depicted in FIG. 6.

DETAILED DESCRIPTION OF EMBODIMENTS

In order to sufficiently understand the configurations and aspects of the present disclosure, one or more example embodiments of the present disclosure are described with reference to the accompanying drawings. It should be noted, however, that the present disclosure may be not limited to the following example embodiments and may be implemented in one or more suitable forms. Rather, the example embodiments are provided only to illustrate the subject matter of the present disclosure and let those having ordinary skill in the art fully understand the scope of the present disclosure.

In the present disclosure, it is understood that, when an element is referred to as being "on" another element, the element may be directly on the other element, or intervening elements may be present therebetween. In contrast, when an element is referred to as being "directly on" another element, there are no intervening elements present. In the drawings, thicknesses of components may be exaggerated for effectively explaining the technical contents. Like reference numerals or symbols refer to like elements throughout the present disclosure, and duplicative descriptions thereof may not be provided for conciseness.

In the present disclosure, the singular forms "a," "an," and "the" are intended to include the plural forms as well, unless the context clearly indicates otherwise. Further, the utilization of "may" when describing example embodiments of the present disclosure refers to "one or more example embodiments of the present disclosure." In addition, unless otherwise specially noted, the phrase "A or B" or "A and/or B" or "A/B" may indicate "including A but not B, B but not A, or A and B." The terms "comprise(s)/include(s)" and/or "comprising/including" used in the present disclosure do not exclude the presence or addition of one or more other components.

In the present disclosure, the term "combination thereof" may refer to a mixture, a stack, a composite, a copolymer, an alloy, a blend, and a reaction product of components.

Unless otherwise defined in the disclosure, a particle diameter/size may be an average particle diameter/size. Also, the particle diameter/size refers to an average particle diameter/size (D50) which refers to a diameter/size of particles at a cumulative volume of about 50 vol% in a particle size distribution. D50 refers to the average diameter (or size) of particles which cumulative volume corresponds to 50 vol% in the particle size distribution (e.g., cumulative distribution), and refers to the value of the particle size corresponding to 50% from the smallest particle when the total number of particles is 100% in the distribution curve accumulated in the order of the smallest particle size to the largest particle size. The average particle diameter/size (D50) may be measured by a method widely suitable to those skilled in the art, for example, may be measured by a particle size analyzer, for example, HORIBA, LA-950 laser particle size analyzer, or may also be measured using a transmission electron microscope (TEM) image or a scanning electron microscope (SEM) image. In one or more example embodiments, the average particle diameter/size may be measured by a measuring device using dynamic light-scattering, wherein the number of particles is counted for each particle size range by performing data analysis, and an average particle diameter/size (D50) value may then be obtained by calculation therefrom. Also, the average particle diameter/size may be measured using a laser diffraction method. When measured by the laser diffraction method, for example, after dispersing particles to be measured in a dispersion medium, the dispersion medium is introduced into a commercial laser diffraction particle size measurement instrument (e.g., Microtrac MT 3000) and irradiated with ultrasonic waves of about 28 kHz at an output of about 60 W, and the average particle diameter/size (D50) based on about 50% of particle size distribution in the measurement instrument may then be calculated. In the present disclosure, when particles are spherical, "diameter/size" indicates an average particle diameter/size, and when the particles are non-spherical, the "diameter/size" indicates a major axis length.

As used herein, the term "metal" includes both elemental and ionic states of metals, as well as metalloids such as silicon and germanium, and the term "alloy" refers to a mixture of two or more metals.

The term "positive electrode active material" refers to a cathode material capable of undergoing lithiation and delithiation, and the term "negative electrode active material" refers to an anode material capable of undergoing lithiation and delithiation.

The terms "lithiation" and "to lithiate" refer to the process of adding lithium to an electrode active material, and the terms "delithiation" and "to delithiate" refer to the process of removing lithium from an electrode active material.

The terms "charging" and "to charge" refer to the process of providing electrochemical energy to a battery, and the terms "discharging" and "to discharge" refer to a process of removing electrochemical energy from a battery.

The term "positive electrode" refers to the electrode where electrochemical reduction and lithiation occur during the discharge process, and the term "negative electrode" refers to the electrode where electrochemical oxidation and delithiation occur during the discharge process.

The term "ionic conductivity" refers to the ability of ions, such as lithium ions, to move within a material and smoothly transfer between electrodes, and the term "electronic conductivity" refers to an ability of electrons to move within a material and smoothly transfer between electrodes.

For example, since the ion conductivity is a property indicating how efficiently lithium ions can move inside the battery, it can be considered that the ion conductivity is directly related to the stability, the charge-discharge rate and overall performance of the rechargeable lithium battery. Accordingly, improving ion conductivity may be advantageous.

The present disclosure relates to a positive electrode for a rechargeable lithium battery that can improve the ion conductivity of the rechargeable lithium battery. The positive electrode according to an example embodiment of the present disclosure has a double-layer electrode (DLE) structure and focuses not only on the structural and material optimization of each layer, but also on improving lithium-ion conductivity by controlling the alignment of each layer according to Formula 1. Furthermore, the present disclosure may enhance capacity characteristics and rapid charging performance.

When the terms "about" or "substantially" are used in this specification in connection with a numerical value, it is intended that the associated numerical value include a tolerance of $\pm 10\%$ around the stated numerical value. When ranges are specified, the range includes all values therebetween such as increments of 0.1%.

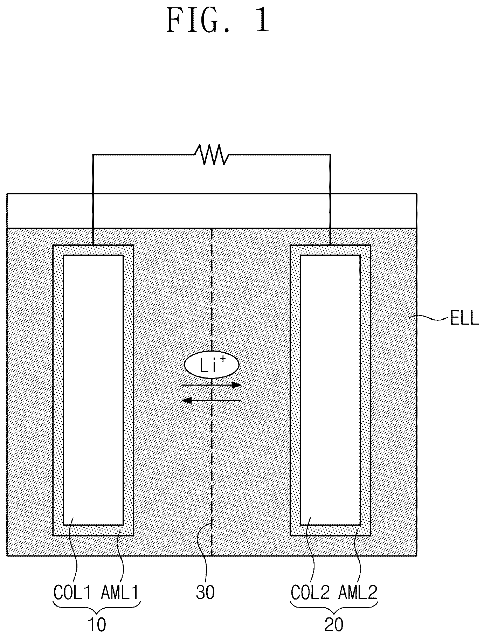

FIG. 1 schematically illustrates a general rechargeable lithium battery. Referring to FIG. 1, the rechargeable lithium battery may include a positive electrode 10, a negative electrode 20, a separator 30, and an electrolyte solution ELL.

The positive electrode 10 and the negative electrode 20 may be spaced apart from each other with the separator 30 interposed therebetween. The separator 30 may be disposed between the positive electrode 10 and the negative electrode 20. The positive electrode 10, the negative electrode 20, and the separator 30 may be in contact with the electrolyte solution ELL. The positive electrode 10, the negative electrode 20, and the separator 30 may be impregnated with the electrolyte solution ELL. In this case, the positive electrode 10 may include a positive electrode current collector COL1 and a positive electrode active material layer AML1, and the negative electrode 20 may include a negative electrode current collector COL2 and a negative electrode active material layer AML2.

The electrolyte solution ELL may constitute a medium for transferring lithium ions between the positive electrode 10 and the negative electrode 20. Within the electrolyte ELL, the lithium ions may move toward the positive electrode 10 or the negative electrode 20 by passing through the separator 30.

## Positive Electrode for Rechargeable lithium Battery

A positive electrode for a rechargeable lithium battery according to an example embodiment of the present disclosure, may include a positive electrode current collector, and a positive electrode active material layer disposed on at least one surface of the positive electrode current collector. The positive electrode active material layer may include a first positive electrode active material layer in contact with the positive electrode current collector, and a second positive electrode active material layer disposed on the first positive electrode active material layer. The first positive electrode active material layer may include a first positive electrode active material including nickel and a first binder. The second positive electrode active material layer may include a second positive electrode active material and a second binder. The positive electrode for a rechargeable lithium battery may satisfy Formula 1 below, and a value of $DA_2$ may be in a range of $\geq$ 48 to $\leq$ 60.

$$\text{Formula 1:}$$

$$DA_2 > DA_1$$

In Formula 1, $DA_1$ may represent a DA (Degree of Alignment) value of the first positive electrode active material layer, $DA_2$ may represent a DA value of the second positive electrode active material layer. These values are each calculated in accordance with Formula 2 below.

$$\text{Formula 2:}$$

$$DA\ (\text{Degree of Alignment}) = (I_b/I_{total}) \times 100$$

In Formula 2, $I_b$ may represent a sum of peak intensities observed along a b-axis, which corresponds to crystal direction in which lithium ions move, measured using CuKα radiation during XRD analysis,

$I_{total}$ may represent a sum of the peak intensities observed within 2θ range from 10° to 65°, measured using CuKα radiation during XRD analysis.

According to example embodiments of the present disclosure, the positive electrode 10 may include a positive electrode current collector COL1 and a positive electrode active material layer AML1 disposed on at least one surface of the positive electrode current collector COL1.

The positive electrode current collector COL1 may provide a reference surface on which the positive electrode active material layer AML1 is disposed. For example, the positive electrode current collector COL1 may include a plate or foil including at least one of indium (In), copper (Cu), magnesium (Mg), stainless steel (SUS), titanium (Ti), iron (Fe), cobalt (Co), nickel (Ni), zinc (Zn), aluminum (Al), germanium (Ge), lithium (Li), or an alloy thereof. For example, the positive electrode current collector COL1 may be or include an aluminum foil.

The thickness of the positive electrode current collector COL1 may be, for example, in a range of $\geq 1 \ \mu m$ to $\leq 100 \ \mu m$, $\geq 1 \ \mu m$ to $\leq 50 \ \mu m$, $\geq 5 \ \mu m$ to $\leq 25 \ \mu m$, or $\geq 10 \ \mu m$ to $\leq 20 \ \mu m$.

According to example embodiments of the present disclosure, the positive electrode active material layer AML1 may have a multilayer structure. For example, the positive electrode active material layer AML1 may have a double-layer structure including a first positive electrode active material layer CAL1 and a second positive electrode active material layer CAL2.

According to example embodiments of the present disclosure, the positive electrode active material layer AML1 may include a first positive electrode active material layer CAL1 in contact with the positive electrode current collector COL1 and a second positive electrode active material layer CAL2 disposed on the first positive electrode active material layer CAL1.

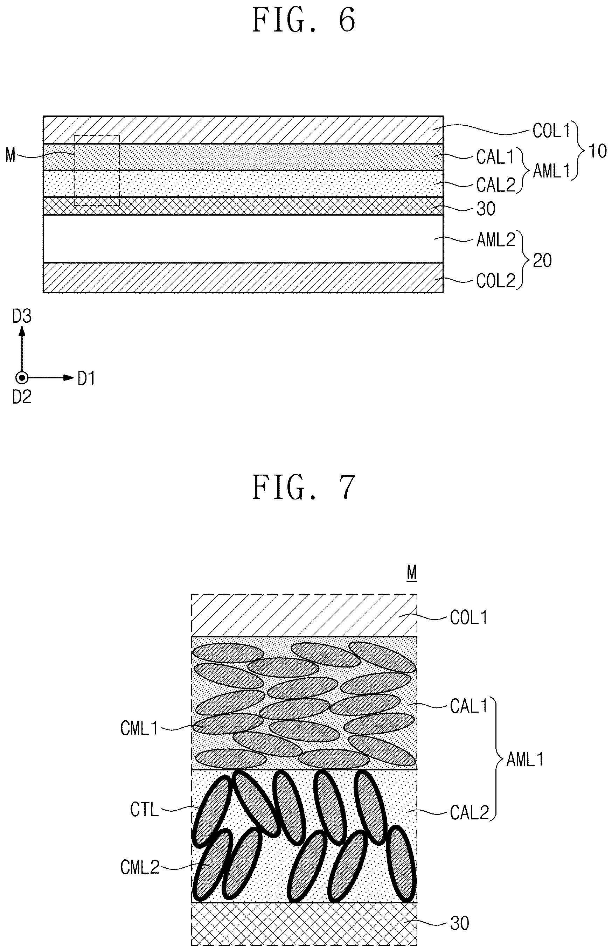

FIG. 6 is a cross-sectional view of a rechargeable lithium battery according to example embodiments of the present disclosure. Referring to FIG. 6, a rechargeable lithium battery according to an example embodiment of the present disclosure may include a positive electrode 10, a separator 30, and a negative electrode 20. For example, the positive electrode 10 may include a positive electrode current collector COL1 and a positive electrode active material layer AML1 disposed on one surface thereof. The negative electrode 20 may include a negative electrode current collector COL2 and a negative electrode active material layer AML2 disposed on one surface thereof. The separator 30 may be interposed between the positive electrode 10 and the negative electrode 20. In this case, the positive electrode active material layer AML1 may include a first positive electrode active material layer CAL1 and a second positive electrode active material layer CAL2. The first positive electrode active material layer CAL1 may be in contact with the positive electrode current collector COL1, and the second positive electrode active material layer CAL2 may be disposed on the first positive electrode active material layer CAL1.

FIG. 7 is an enlarged schematic cross-sectional view of the "M" region of FIG. 6. Referring to FIG. 7, a positive electrode active material layer AML1 according to an example embodiment of the present disclosure may include a first positive electrode active material layer CAL1 in contact with a positive electrode current collector COL1, and may include a second positive electrode active material layer CAL2 disposed on the first positive electrode active material layer CAL1. For example, the second positive electrode active material layer CAL2 may be in contact with a separator 30, and may be interposed between the first positive electrode active material layer CAL1 and the separator 30. In this case, the shapes of a first positive electrode active material CML1 and a second positive electrode active material CML2 are illustrated as elliptical shape for ease of explaining their orientation, but are not limited thereto. As shown in FIG. 7, the second positive electrode active material CML2 has a coating layer CTL formed on a surface thereof, providing superior or improved vertical alignment compared to the first positive electrode active material CML1, and thus can exhibit desired or improved ion conductivity.

A positive electrode for a rechargeable lithium battery according to example embodiments of the present disclosure may satisfy Formula 1 below.

$$\text{Formula 1:}$$

$$DA_2 > DA1$$

In Formula 1, $DA_1$ may represent a DA (Degree of Alignment) value of the first positive electrode active material layer, and $DA_2$ may represent a DA value of the second positive electrode active material. These values are each calculated in accordance with Formula 2 below.

## Formula 2:

$$DA \text{ (Degree of Alignment)} = (I_b/I_{total}) \times 100$$

In Formula 2, $I_b$ may represent sum of peak intensities observed along a b-axis, which corresponds to a crystal direction in which lithium ions move, measured using CuKα radiation during XRD analysis. $I_{total}$ may represent a sum of peak intensities observed in the 2θ range form 10° to 65°, measured using CuKα radiation during XRD analysis.

For example, the first positive electrode active material layer and the second positive electrode active material layer may each have a DA (Degree of Alignment) value defined by Formula 2 above.

For example, an active material generally has a crystal structure, which can be represented by a three-dimensional lattice in which atoms are arranged in a particular direction. The crystal structure can be defined by three axes: a-axis, b-axis, and c-axis, which represent specific orientations of the lattice. The b-axis may refer to a primary pathway through which lithium ions migrate during intercalation and deintercalation. The b-axis direction in the crystal structure may provide a relatively easy channel for lithium-ion movement. For example, the $I_b$ may be a sum of peak intensity values observed at 2θ angles of $22.8\pm0.2°$, $29.8\pm0.2°$, $36.6\pm0.2°$, $50.4\pm0.2°$, $56.7\pm0.2°$, $58.4\pm0.2°$, and $62.0\pm0.2°$, as measured by XRD using CuKα rays.

The peak intensity value may indicate a height value of a peak, or an integrated area value of a peak. For example, the peak intensity value may refer to an integrated area value of a peak.

The XRD measurement may be performed using CuKα ray as a target ray. In order to improve peak intensity resolution, a monochromator device may extract and measure a target ray. In this case, the measurement can be performed under measurement conditions of a scan speed (°/S) of 0.044 to 0.089 and a step size (°/step) of 0.013 to 0.039 within a 2θ° range of 10° to 80°.

The DA value may represent the degree to which the positive electrode active material in the positive electrode active material layer AML1 is oriented at a specific or desired angle. A higher DA value may indicate a greater degree of vertical alignment. The DA value may be obtained by performing XRD measurement on the positive electrode active material layer (AML1) acquired by disassembling the fully discharged state of the rechargeable lithium battery after charge and discharge cycles. In this case, the charge and discharge cycles may be performed at 0.1 C to 0.2 C for 1 to 2 cycles. The DA value may represent a property that remains stable even after the charge and discharge cycles.

According to example embodiments of the present disclosure, the first positive electrode active material layer CAL1 and the second positive electrode active material layer CAL2 may satisfy Formula 1 below. That is, the DA value of the second positive electrode active material layer $DA_2$ may be greater than the DA value of the first positive electrode active material layer $DA_1$.

## Formula 1:

$$DA_2 > DA_1$$

For example, the ratio of $DA_1$ to $DA_2$ may be in a range of about 1 : 2.0 to about 1 : 4.5, 1 : 2.5 to 1 : 4.2, 1 : 3.0 to 1 : 4.5 or 1 : 3.0 to 1 : 4.0.

Further, the $DA_1$ may be in a range of $\geq 10$ to $\leq 20$, or $\geq 15$ to $\leq 20$, and the $DA_2$ may be in a range of $\geq 48$ to $\leq 60$, $\geq 49$ to $\leq 58$, or $\geq 50$ to $\leq 55$.

By satisfying the respective ranges of the DA value ($DA_1$) of the first positive electrode active material layer and the DA value ($DA_2$) of the second positive electrode active material layer, ion conductivity can be further improved.

In addition, a thickness ratio of the first positive electrode active material layer CAL1 to the second positive electrode active material layer CAL2 may range from about 1:10 to about 10:1. For example, the thickness ratio of the first positive electrode active material layer CAL1 to the second positive electrode active material layer CAL2 may range from 1:5 to 5:1, 1:2 to 10:1, 1:2 and 5:1, 1:1 to 5:1, or 2:1 to 10:1. By satisfying the above range of thickness ratio, the ion conductivity can be further improved.

According to example embodiments of the present disclosure, the first positive electrode active material layer CAL1 may include a first binder and a first positive electrode active material CML1 including nickel. The second positive electrode active material layer CAL2 may include a second positive electrode active material CML2 and a second binder.

The first positive electrode active material CML1 may include at least one of a lithium nickel-based oxide, a cobalt-free nickel-manganese-based oxide, or a combination thereof. In addition, the second positive electrode active material CML2 may include at least one of a lithium cobalt-based oxide, a lithium manganese-based oxide, or a lithium iron phosphate compound, or a combination thereof.

The first positive electrode active material may be composed of or include a material that is different from the second positive electrode active material.

The first positive electrode active material CML1 may include two or more kinds of positive electrode active materials. For example, the first positive electrode active material CML1 may include two kinds of positive electrode active materials, and the first positive electrode active material CML1 may include a positive electrode active material "A" including nickel, and a positive electrode active material "B" not including nickel. For example, the positive electrode active material A may include at least one of a lithium nickel-based oxide, a cobalt-free nickel-manganese-based oxide, or a combination thereof. The positive electrode active material B may include at least one of a lithium cobalt-based oxide, lithium manganese-based oxide, a lithium iron phosphate compound, or a combination of thereof. For example, the first positive electrode active material CML1 may include a positive electrode active material A including nickel and a positive electrode active material B including a lithium iron phosphate compound.

For example, the first positive electrode active material CML1 may include the positive electrode active material A, which includes at least one of lithium nickel cobalt aluminum oxide (NCA), lithium nickel cobalt manganese oxide (NCM), lithium nickel manganese oxide spinel (LNMO), or lithium nickel cobalt manganese aluminum oxide (NCMA), and the positive electrode active material B, which includes a lithium iron phosphate compound. The second positive electrode active material CML2 may include a lithium iron phosphate compound.

The weight ratio of the positive electrode active material A to the positive electrode active material B may range from about 1:10 to about 10:1. For example, the weight ratio of the positive electrode active material A to the positive electrode active material B may range from 1:5 to 5:1, 1:10 to 5:1, or 1:1 to 5:1.

In addition, the positive electrode active material A may include a range of about 50 at% or more of nickel, relative to 100 at% of transition metals (excluding lithium) in the positive electrode active material A. For example, the positive electrode active material A may include 65 at% or more, 80 at% or more, 85 at% or more, 90 at% or more, 91 at% or more, 94 at% or more, or 99 at% or more of nickel, relative to 100 at% of transition metals in the positive electrode active material A.

According to example embodiments of the present disclosure, the second positive electrode active material CML2 may have a surface that is coated by a coating process. For example, the coating process may include at least one of carbon coating, metal oxide coating, metal fluoride coating, solid electrolyte coating, plasma treatment, doping treatment, or a combination thereof. For example, the coating process may be performed using, e.g., a mixer (e.g., Nobilta) or using an ALD (Atomic Layer Deposition) process.

The carbon coating may be performed using amorphous carbon, graphene, CNT, or the like. For example, the coating may be achieved through, e.g., a sol-gel process, where the carbon precursor is mixed, dried to evaporate the solvent and then thermally decomposed at a high temperature ranging from $\geq 500°C$ to $\leq 1,200°C$, chemical vapor deposition (CVD), or physical vapor deposition (PVD), but may be not limited thereto.

The metal oxide coating may be performed using at least one of $MgO$, $Al_2O_3$, $TiO_2$, $ZrO_2$, or the like, and may be performed by, e.g., a sol-gel process, chemical vapor deposition (CVD), or wet coating, but may be not limited thereto.

The metal fluoride coating may be performed using at least one of $LiF$, $MgF_2$, $AlF_3$, or the like, and may be performed by a sol-gel process, atomic layer deposition (ALD), or an ion implantation method, but may be not limited thereto.

According to example embodiments of the present disclosure, the second positive electrode active material may include a coating layer on a surface thereof. The coating layer may exhibit paramagnetic or diamagnetic properties. For example, the coating layer may include at least one of Al, Zn, Ti, Mg, Zr, graphite, and combinations thereof.

The thickness of the coating layer may be in a range of $\geq 1$ nm to $\leq 5 \mu m$, $\geq 5$ nm to $\leq 2 \mu m$, $\geq 10$ nm to $\leq 1 \mu m$, $\geq 100$ nm to $\leq 800$ nm, or $\geq 150$ nm to $\leq 500$ nm.

In the positive electrode for a rechargeable lithium battery, a charge transfer resistance ($R_{ct}$) value between the second positive electrode active material layer and the electrolyte measured by electrochemical impedance spectroscopy (EIS) may be in a range of $\geq 0.01\Omega$ to $\leq 0.025Q$. For example, the interface resistance value between the second positive electrode active material layer and the electrolyte measured by EIS may be $0.02\Omega$ to $0.025\Omega$, $0.05\Omega$ to $0.02Q$, or $0.01\Omega$ to $0.015\Omega$.

For example, the second positive electrode active material layer may include a first surface, and a second surface opposite to the first surface. The first surface may be in contact with the electrolyte. The first surface may face the separator. The second surface may be in contact with the first positive electrode active material layer. The interfacial resistance value (i.e., $R_{ct}$) obtained through the EIS may be measured with respect to the first surface, which is the interface between the positive electrode active material layer and the electrolyte. The charge transfer resistance value of the first surface, as measured by the EIS may be in a range of $\geq 0.01\Omega$ to $\leq 0.025\Omega$.

The amount of the positive electrode active material in the positive electrode active material layer may be in a range of $\geq 90$ wt% to $\leq 99.5$ wt%, $\geq 92$ wt% to $\leq 99.5$ wt%, or $\geq 95$ wt% to $\leq 99$ wt% based on 100 wt% of the positive electrode active material layer.

For example, the amount of the first positive electrode active material in the first positive electrode active material layer may be in a range of $\geq 90$ wt% to $\leq 99.5$ wt%, $\geq 92$ wt% to $\leq 99.5$ wt%, or $\geq 95$ wt% to $\leq 99$ wt%, based on 100 wt% of the first positive electrode active material layer. The amount of the second positive electrode active material in the second positive electrode active material layer may be in a range of $\geq 90$ wt% to $\leq 99.5$ wt%, $\geq 92$ wt% to $\leq 99.5$ wt%, or $\geq 92$ wt% to $\leq 99.5$ wt%, based on 100 wt% of the second positive electrode active material layer.

According to example embodiments of the present disclosure, the positive electrode active material layer AML1 may include a binder. For example, the first positive electrode active material layer CAL1 may include a first binder, and the second positive electrode active material layer CAL2 may include a second binder.

The binder may adhere positive electrode active material particles to each other. The first binder may attach the first positive electrode active material CML1 to the positive electrode current collector COL1.

The binder may include, but may be not limited to, at least one of polyvinyl alcohol, carboxymethyl cellulose, hydroxypropyl cellulose, diacetyl cellulose, polyvinyl chloride, carboxylated polyvinyl chloride, polyvinyl fluoride, polymers containing ethylene oxide, polyvinyl pyrrolidone, polyurethane, polytetrafluoroethylene, polyvinylidene fluoride, polyethylene, polypropylene, styrene-butadiene rubber, (meth)acrylated styrene-butadiene rubber, epoxy resins, (meth) acrylic resins, polyester resins, nylon, or a combination thereof.

For example, each of, or at least one of, the first binder and the second binder may include at least one of polyvinyl alcohol, carboxymethyl cellulose, hydroxypropyl cellulose, diacetyl cellulose, polyvinyl chloride, carboxylated polyvinylchloride, polyvinylfluoride, polyethylene oxide, polyvinylpyrrolidone, polyurethane, polytetrafluoroethylene, polyvinylidene fluoride, polyethylene, polypropylene, butadiene rubber (BR), styrene-butadiene rubber (SBR), nitrile-butadiene rubber (NBR), carboxylated nitrile- butadiene rubber (XNBR), silicone rubber (SR), or a combination thereof. The first binder and the second binder may be the same or different from each other. For example, the first binder and the second binder may include polyvinylidene fluoride (PVDF).

The amount of the first binder may be in a range of $\geq 0.5$ wt% to $\leq 5$ wt% based on 100 wt% of the first positive electrode active material layer CAL1. For example, the amount of the first binder may be in a range of $\geq 1$ wt% to $\leq 4.5$ wt%, or $\geq 1.5$ wt% to $\leq 4$ wt% based on 100 wt% of the first positive electrode active material layer.

The amount of the second binder may be in a range of $\geq 0.5$ wt% to $\leq 5$ wt% based on 100 wt% of the second positive electrode active material layer CAL2. For example, the amount of the second binder may be in a range or $\geq 1$ wt% to $\leq 4.5$ wt%, or $\geq 1.5$ wt% to $\leq 4$ wt% based on 100 wt% of the second positive electrode active material layer.

In addition, the positive electrode active material layer AML1 may further include a conductive material. For example, each of, or at least one of, the first and second positive electrode active material layers CAL1 and CAL2 may further include the conductive material.

The conductive material may impart conductivity to the electrode. The conductive material may be or include any electronically conductive material that does not cause an undesired chemical change in the electrode (or battery). For example, the conductive material may include a carbon-based material such as at least one of natural graphite, artificial graphite, carbon black, acetylene black, Ketjen black, carbon fiber, carbon nanofiber, or carbon nanotube; a metal-based material such as at least one of copper, nickel, aluminum, or silver; a conductive polymer such as polyphenylene derivatives; or mixtures thereof. The metal-based material may be in the form of a metal powder or a metal fiber.

For example, the conductive material may include the carbon-based material, the metal-based material in the form of a metal powder or a metal fiber, the conductive polymer, or a mixture thereof. For example, the conductive material may include a mixture of carbon black and carbon nanotube, such as LCNT (Long carbon nanotube) or TWCNT (Thin-walled carbon nanotube).

The amount of the conductive material may be in the range of $\geq 0.5$ wt% to $\leq 5$ wt% based on 100 wt% of the positive electrode active material layer AML1. For example, the amount of the conductive material in the first positive electrode active material layer CAL1 may be in the range of $\geq 0.5$ wt% to $\leq 4$ wt%, $\geq 0.5$ wt% to $\leq 3.5$ wt%, or $\geq 0.5$ wt% to $\leq 2$ wt%, based on 100 wt% of the first positive electrode active material layer CAL1. The amount of the conductive material in the second positive electrode active material layer CAL2 may be in the range of $\geq 0.5$ wt% to $\leq 4$ wt%, $\geq 0.5$ wt% to $\leq 3.5$ wt%, or $\geq 0.5$ wt% to $\leq 2$ wt%, based on 100 wt% of the second positive electrode active material layer CAL2.

## Rechargeable lithium battery

According to example embodiments of the present disclosure, a rechargeable lithium battery may include the positive electrode for a rechargeable lithium battery as described above, and a negative electrode.

FIG. 1 is a schematic conceptual diagram illustrating a rechargeable lithium battery according to example embodiments of the present disclosure. Referring to FIG. 1, the rechargeable lithium battery may include a positive electrode 10, a negative electrode 20, a separator 30, and an electrolyte ELL.

The description of the positive electrode is as described above.

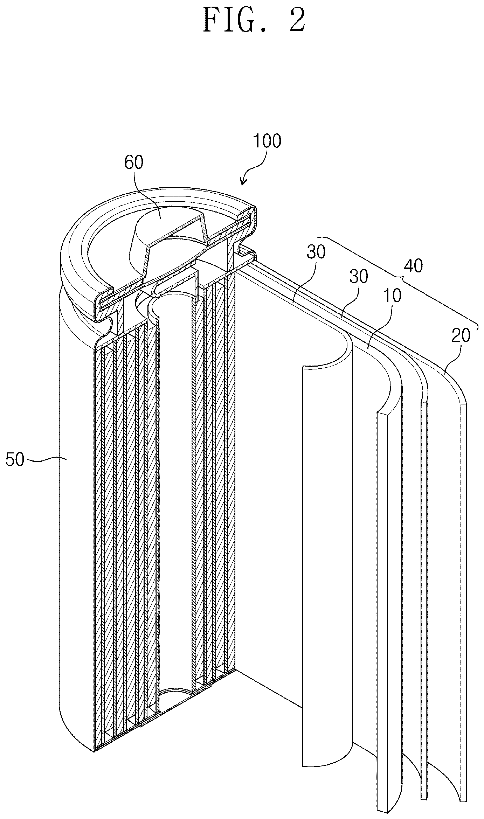

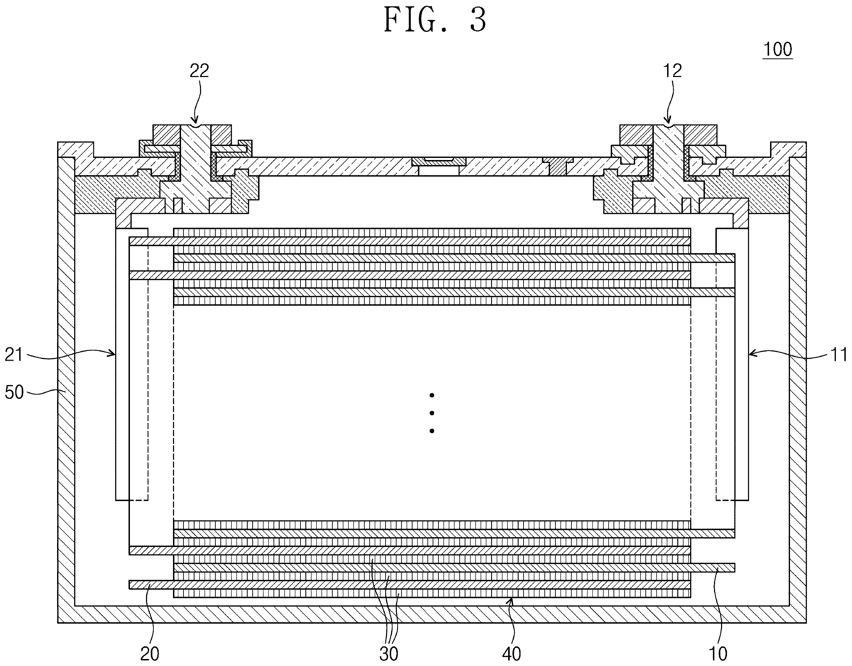

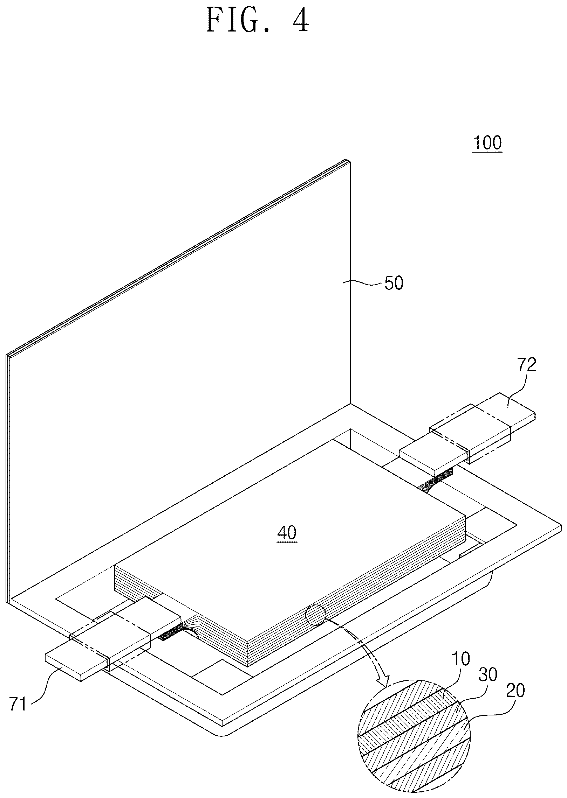

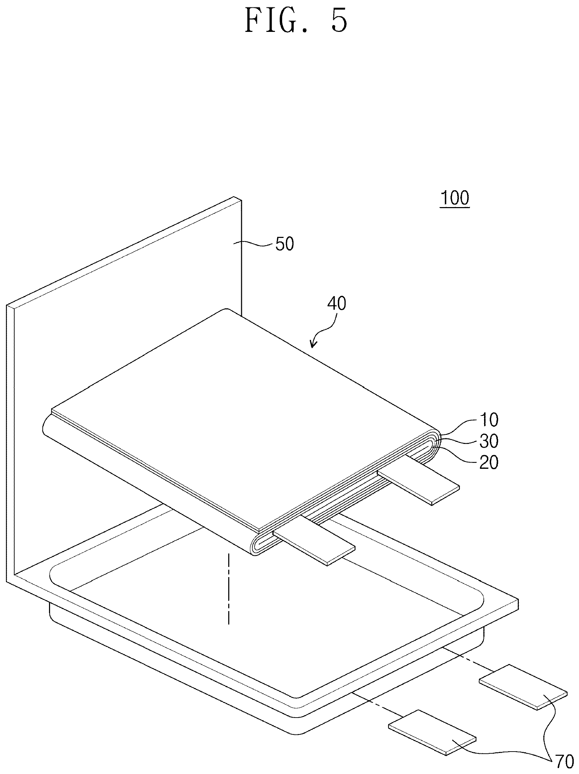

In addition, the rechargeable lithium battery may be classified into a cylindrical type, a prismatic type, a pouch type, or a coin type depending on the shape thereof. FIGS. 2 to 5 illustrate rechargeable lithium batteries according to another example embodiment of the present disclosure. For example, FIG. 2 shows a cylindrical type, FIG. 3 shows a prismatic type, and FIGS. 4 and 5 show pouch type batteries. Referring to FIGS. 2 to 5, the rechargeable lithium battery 100 may include an electrode assembly 40 in which a separator 30 is interposed between a positive electrode 10 and a negative electrode 20, and a case 50 in which the electrode assembly 40 is incorporated. As shown in FIG. 2, the rechargeable lithium battery 100 may include a sealing member 60 to seal the case 50. As shown in FIG. 3, the rechargeable lithium battery 100 may include a positive electrode lead tab 11, a positive electrode terminal 12 connected to the positive electrode lead tab 11, a negative electrode lead tab 21, and a negative electrode terminal 22 connected to the negative electrode lead tab 21. In addition, as shown in FIGS. 4 and 5, the rechargeable lithium battery 100 may include an electrode tab 70 illustrated in FIG. 5, or a positive electrode tab 71 and a negative electrode tab 72 illustrated in FIG. 4, the electrode tabs 70/71/72 forming an electrical pathway to guide the current generated in the electrode assembly 40 to the external circuit.

**Negative electrode**

The negative electrode 20 may include a negative electrode current collector COL2 and a negative electrode active material layer AML2 disposed on at least one surface of the negative electrode current collector COL2. The negative electrode active material layer AML2 may include a negative electrode active material, and may further include a binder and/or a conductive material.

The negative electrode active material in the negative electrode active material layer AML2 may include at least one of a material that reversibly intercalates/deintercalates lithium ions, a lithium metal, a lithium metal alloy, a material capable of doping into and de-doping from lithium, or a transition metal oxide.

The material that reversibly intercalates/deintercalates lithium ions may include a carbon-based negative electrode active material, for example, crystalline carbon, amorphous carbon and/or a combination thereof. The crystalline carbon may be graphite, such as non-shaped (e.g., irregularly shaped), sheet-shaped (e.g., generally sheet-shaped), flake-shaped (e.g., generally flake-shaped), sphere-shaped (e.g., generally sphered-shaped), or fiber-shaped (e.g., generally fiber-shaped) natural graphite and/or artificial graphite. The amorphous carbon may be or include at least one of soft carbon, hard carbon, a mesophase pitch carbide product, calcined coke, and/or the like.

The lithium metal alloy may include an alloy of lithium with a metal such as or including at least one of among sodium (Na), potassium (K), rubidium (Rb), cesium (Cs), francium (Fr), beryllium (Be), magnesium (Mg), calcium (Ca), strontium (Sr), silicon (Si), antimony (Sb), lead (Pb), indium (In), zinc (Zn), barium (Ba), radium (Ra), germanium (Ge), aluminum (Al), and tin (Sn).

The material capable of doping into and de-doping from lithium may be or include a Si-based negative electrode active material or a Sn-based negative electrode active material. The Si-based negative electrode active material may include at least one of silicon, a silicon-carbon composite, $SiO_x$ (where $0<x\leq2$), an Si-Q alloy (where Q may be or include at least one of an alkali metal, an alkaline earth metal, a Group 13 element, a Group 14 element (except for Si), a Group 15 element, a Group 16 element, a transition metal, a rare earth element, and/or a (e.g., any suitable) combination thereof), and/or a (e.g., any suitable) combination thereof. The Sn-based negative electrode active material may be or include at least one of Sn, $SnO_k$ (where $0 < k \leq 2$) (e.g., $SnO_2$), a Sn-based alloy, and/or a (e.g., any suitable) combination thereof.

The silicon-carbon composite may be or include a composite of silicon and amorphous carbon (e.g., in a form of particles). According to one or more example embodiments, the silicon-carbon composite may be in the form of silicon particle or in the form of silicon particle coated with amorphous carbon on the surface thereof. For example, the silicon-carbon composite may include a secondary particle (core), in which primary silicon particles are assembled, and an amorphous carbon coating layer (shell) on (e.g., positioned on) the surface of the secondary particle. The amorphous carbon may also be between the primary silicon particles, and, for example, the primary silicon particles may be coated with the amorphous carbon. The secondary particle may be dispersed in an amorphous carbon matrix.

The silicon-carbon composite may further include crystalline carbon. For example, the silicon-carbon composite may include a core including crystalline carbon and silicon particles, and an amorphous carbon coating layer on the surface of the core.

The Si-based negative electrode active material and/or the Sn-based negative electrode active material may be used in combination with a carbon-based negative electrode active material.

In addition, the amount of the negative electrode active material in the negative electrode active material layer AML2 may be in a range of $\geq$ 90 wt % to $\leq$ 99 wt % based on total weight of the negative electrode active material layer AML2. For example, the amount of the negative electrode active material may be $\geq$ 93 wt% to $\leq$ 99 wt% or $\geq$ 96 wt% to $\leq$ 98.5 wt% based on 100 wt% of the negative electrode active material layer AML2.

For example, the negative electrode active material may include at least one of graphite and Si composite.

When the negative electrode active material includes both Si composite and graphite, the Si composite and graphite may be included in the form of a mixture, and in this case, the weight ratio of the Si composite to graphite may range from about 1:99 to about 50:50. For example, the weight ratio of the Si composite to graphite may range from 3:97 to 20:80 or from 5:95 to 20:80.

The Si composite may include a core including Si-based particles, and an amorphous carbon coating layer. For example, the Si-based particles may include at least one of a Si-C composite, $SiO_x$ ($0<x\leq2$), or a Si alloy. For example, the Si-C composite may include a core including Si particles and crystalline carbon, as well as an amorphous carbon coating layer located on the surface of the core.

The crystalline carbon may, for example, include graphite, for example natural graphite, artificial graphite or mixtures thereof.

The negative electrode may include a binder. The binder may improve attachment of the negative electrode active material particles to each other (e.g., to attach the negative electrode active material to each other), and to improve attachment of the negative electrode active material to the current collector COL2. The binder may include a non-aqueous (e.g., water-insoluble) binder, an aqueous (e.g., watersoluble) binder, a dry binder, and/or a combination thereof.

The non-aqueous binder may include at least one of polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamide-imide, polyimide, and/or a (e.g., any suitable) combination thereof.

The aqueous binder may be or include at least one of among a styrene-butadiene rubber, a (meth)acrylated styrene-butadiene rubber, a (meth)acrylonitrile-butadiene rubber, a (meth)acrylic rubber, a butyl rubber, a fluoro rubber, polyethylene oxide, polyvinylpyrrolidone, polyepichlorohydrine, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, and/or a (e.g., any suitable) combination thereof.

When an aqueous binder is used as a binder of the negative electrode, a cellulose-based compound capable of imparting or providing viscosity may be further included. The cellulose-based compound may include at least one of among carboxymethyl cellulose, hydroxypropylmethyl cellulose, methyl cellulose, and an alkali metal salt thereof. The alkali metal may include at least one of Na, K, and/or Li.

The dry binder may be or include a polymer material that is capable of being fibrous. For example, the dry binder may include at least one of polytetrafluoroethylene, polyvinylidene fluoride, a polyvinylidene fluoride-hexafluoropropylene copolymer, polyethylene oxide, and/or a (e.g., any suitable) combination thereof.

In addition, the amount of the binder may range from $\geq 0.5$ wt% to $\leq 5$ wt% based on the total weight of the negative electrode. For example, the negative electrode active material layer may include $\geq 0.5$ wt % to $\leq 3.5$ wt % or $\geq 0.5$ wt % to $\leq 2$ wt % of the binder.

The negative electrode may include a conductive material. The description of the conductive material is as described above.

In addition, as the negative electrode current collector COL2, a material such as or including at least one of a copper foil, a nickel foil, a stainless-steel foil, a titanium foil, a nickel foam, a copper foam, a polymer substrate coated with a conductive metal, and a combination thereof, can be used.

## Separator

Depending on the type of the rechargeable lithium battery, a separator 30 may be present between the positive electrode 10 and the negative electrode 20. The separator 30 may include at least one of polyethylene, polypropylene, polyvinylidene fluoride, or suitable mixed multilayer such as a polyethylene/polypropylene two-layer separator, a polyethylene/polypropylene/polyethylene three-layer separator, a polypropylene/polyethylene/polypropylene three-layer separator, and/or the like.

The separator 30 may include a porous substrate and a coating layer including an organic material, an inorganic material, and/or a (e.g., any suitable) combination thereof, on a surface (e.g., one surface or two opposite surfaces) of the porous substrate.

The porous substrate may be or include a polymer film formed of or including any one polymer such as or including at least one of polyolefins, such as polyethylene and polypropylene, polyesters, such as polyethylene terephthalate and polybutylene terephthalate, polyacetal, polyamide, polyimide, polycarbonate, polyether ketone, polyarylether ketone, polyetherimide, polyamide-imide, polybenzimidazole, polyethersulfone, polyphenylene oxide, a cyclic olefin copolymer, polyphenylene sulfide, polyethylene naphthalate, a glass fiber, and polytetrafluoroethylene (e.g., Teflon™), and/or a (e.g., any suitable) copolymer or mixture of two or more thereof.

The organic material may include a polyvinylidene fluoride-based polymer and/or a (meth)acrylic polymer.

The inorganic material may include inorganic particles such as or including at least one of $Al_2O_3$, $SiO_2$, $TiO_2$, $SnO_2$, $CeO_2$, $MgO$, $NiO$, $CaO$, $GaO$, $ZnO$, $ZrO_2$, $Y_2O_3$, $SrTiO_3$, $BaTiO_3$, $Mg(OH)_2$, boehmite, and/or a (e.g., any suitable) combination thereof, but one or more example embodiments of the present disclosure are not limited thereto.

The organic material and the inorganic material may be mixed in one coating layer, or in a stacked form of a coating layer including an organic material and a coating layer including an inorganic material.

## Electrolyte

The electrolyte solution ELL for a rechargeable lithium battery may include a non-aqueous organic solvent and a lithium salt.

The non-aqueous organic solvent may constitute a medium for transmitting ions taking part in the electrochemical reaction of a battery.

The non-aqueous organic solvent may be or include at least one of a carbonate-based, ester-based, ether-based, ketone-based, or alcohol-based solvent, an aprotic solvent, and/or a (e.g., any suitable) combination thereof.

The carbonate-based solvent may include at least one of dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and/or the like.

The ester-based solvent may include at least one of methyl acetate, ethyl acetate, n-propyl acetate, dimethyl acetate, methyl propionate, ethyl propionate, decanolide, mevalonolactone, valerolactone, caprolactone, and/or the like.

The ether-based solvent may include at least one of dibutyl ether, tetraglyme, diglyme, dimethoxyethane, 2-methyltetrahydrofuran, 2,5-dimethyltetrahydrofuran, tetrahydrofuran, and/or the like. In one or more embodiments, the ketone-based solvent may include cyclohexanone, and/or the like. The alcohol-based solvent may include ethyl alcohol, isopropyl alcohol, and/or the like. The aprotic solvent may include at least one of nitriles, such as R-CN (where R may be a C2 to C20 linear, branched, or cyclic hydrocarbon group, and may include a double bond, an aromatic ring, and/or an ether bond); amides, such as dimethylformamide; dioxolanes, such as 1,3-dioxolane and/or 1,4-dioxolane; sulfolanes, and/or the like.

The non-aqueous organic solvents may be used alone or in combination of two or more solvents.

In one or more example embodiments, when using a carbonate-based solvent, a cyclic carbonate and a chain carbonate may be mixed, and the cyclic carbonate and the chain carbonate may be mixed in a volume ratio in a range of about 1:1 to about 1:9.

The lithium salt dissolved in the organic solvent is configured to supply lithium ions in a battery, to enable an operation of a rechargeable lithium battery, and to improve the transportation of the lithium ions between the positive electrode and the negative electrode. Examples of the lithium salt may include at least one of $LiPF_6$, $LiBF_4$, $LiSbF_6$, $LiAsF_6$, $LiClO_4$, $LiAlO_2$, $LiAlCl_4$, $LiPO_2F_2$, $LiCl$, $LiI$, $LiN(SO_3C_2F_5)_2$, $Li(FSO_2)_2N$ (lithium bis(fluorosulfonyl)imide, LiFSI), $LiC_4F_9SO_3$, $LiN(C_xF_{2x+1}SO_2)(C_yF_{2y+1}SO_2)$ (where x and y are integers of 1 to 20), lithium trifluoromethane sulfonate, lithium tetrafluoroethanesulfonate, lithium difluoro(oxalato)borate (LiDFOB), lithium difluorobis(oxalato)phosphate (LiDFBOP), and lithium bis(oxalato) borate (LiBOB).

For example, the lithium salt may include at least one of $LiPF_6$, $LiClO_4$, $LiBF_4$, lithium bis(fluorosulfonyl)imide (LiFSI), LiTFSI, $LiSO_3CF_3$, LiBOB, LiFOB, LiDFBP, LiTFOP, $LiPO_2F_2$, $LiSbF_6$, $LiAsF_6$, $LiAlO_2$, $LiAlCl_4$, $LiCl$, $LiI$, $LiN(SO_3C_2F_5)_2$, $Li(FSO_2)_2N$, and $LiC_4F_9SO_3$. For example, the lithium salt may be or include $LiPF_6$.

In addition, the concentration of the lithium salt may range from $\geq 0.1M$ to $\leq 0.2M$. For example, the concentration of the lithium salt may be 0.5M or more, or 1.0M or more, and it may be 2.0M or less, 1.7M or less, or 1.5M or less. By satisfying this concentration range, the conductivity and viscosity of the electrolyte may be maintained as desired.

The following describes example embodiments and comparative examples of the present disclosure. However, the embodiments described below are merely examples of the present disclosure, and are not intended to limit the disclosure to these embodiments.

**Embodiments**

**Manufacturing Rechargeable lithium Battery**

**Example 1**

(1) Preparation of Positive Electrode

A mixture including 96 wt% of a first positive electrode active material composed of lithium nickel-cobalt-aluminum oxide (NCA) and $LiFePO_4$ in a weight ratio of 4:1, 3 wt% of polyvinylidene fluoride (PVdF) as a first binder, and 1 wt% of TWCNT as a conductive material was mixed and dispersed in N-methyl-2-pyrrolidone (NMP) to prepare a first positive electrode active material slurry. Subsequently, the first positive electrode active material slurry was coated onto a 15 μm-thick A1 foil, dried at 100° C, and then pressed to form a first positive electrode active material layer.

$LiFePO_4$ was prepared as the second positive electrode active material, and the surface thereof was coated with aluminum oxide ($Al_2O_3$) using an atomic layer deposition process (coating layer thickness: 0.5 μm). A mixture including 96 wt% of the second positive electrode active material, 3 wt% of polyvinylidene fluoride as a second binder, and 1 wt% of a mixture of LCNT and carbon black in a weight ratio of 7:3 was mixed and dispersed in N-methyl-2-pyrrolidone to prepare a second positive electrode active material slurry. Subsequently, the second positive electrode active material slurry was coated onto the first positive electrode active material layer, dried at 100° C, and then pressed to form a second positive electrode active material layer. At this time, the thickness ratio of the first positive electrode active material layer to the second positive electrode active material was 1:1.

(2) Preparation of Negative Electrode

A mixture including 98 wt% of a negative electrode active material composed of artificial graphite and silicon nanoparticles in a weight ratio of 93:7, 1 wt% of styrene-butadiene rubber as a binder, and 1 wt% of carboxymethyl cellulose was mixed with distilled water to prepare a negative electrode active material slurry. The negative electrode active material slurry was coated onto a 10 $\mu$m-thick Cu foil, dried at 100° C, and then pressed to fabricate the negative electrode.

(3) Manufacturing Rechargeable lithium Battery

The negative electrode, the positive electrode and a 10 $\mu$m-thick polyethylene separator were assembled to prepare an electrode assembly, and an electrolyte solution was injected to manufacture a rechargeable lithium battery. The electrolyte solution used was prepared by dissolving 1.5M of $LiPF_6$ in an organic solvent composed of ethylene carbonate (EC), diethyl carbonate (DEC), and dimethyl carbonate (DMC) mixed in a volume ratio of 2:1:7. Additionally, 3 parts by weight of fluoroethylene carbonate (FEC) was added per 100 parts by weight of the organic solvent.

**Example 2**

With a difference that the surface of the second positive electrode active material was coated with aluminum oxide ($Al_2O_3$) using an atomic layer deposition process to form a coating layer with a thickness of 3.0 $\mu$m in step (1), a rechargeable lithium battery was manufactured in the same manner as in Example 1.

**Comparative Example 1**

A rechargeable lithium battery was manufactured in the same manner as in Example 1, with a difference that only the first positive electrode active material layer was formed, and the second positive electrode active material layer was excluded.

**Comparative Example 2**

With a difference that the first positive electrode active material layer was not formed, and uncoated $LiFePO_4$ was used as the second positive electrode active material to form only the second positive electrode active material layer in step (1), a rechargeable lithium battery was manufactured in the same manner as in Example 1.

**Comparative Example 3**

With a difference that uncoated $LiFePO_4$ was used as the second positive electrode active material, a rechargeable lithium battery was manufactured in the same manner as in Example 1.

**Evaluation Example 1: Measurement of DA Value**

The DA value was measured using XRD for the rechargeable lithium batteries manufactured in Examples 1 and 2, and Comparative Examples 1 to 3.

For example, the rechargeable lithium battery was charged and discharged twice at 0.1 C, and then completely discharged to 2.75 V at 0.1 C. The positive electrode obtained by disassembling the rechargeable lithium battery was measured for XRD using a CuK$\alpha$ ray as a target ray. At this time, an XRD device (product name: X'Pert, manufacturer: PANalytical) was used, and the monochromator device was removed to improve the peak intensity resolution. The measurement conditions were set to a 2$\theta$ range of 10° to 80° with a scan speed of 0.06436°/S and a step size of 0.026°/step.

The DA values of the first and second positive electrode active material layers were calculated from the measured XRD results. For example, from the measured XRD results, the sum of the integrated areas of the peaks observed at 22.8 $\pm$0.2°, 29.8$\pm$0.2°, 36.6$\pm$0.2°, 50.4$\pm$0.2°, 56.7$\pm$0.2°, 58.4$\pm$0.2°, and 62.0$\pm$0.2° in 2$\theta$ was taken as $I_b$. The sum of the integrated areas of all peaks observed in the range of 10° to 65° in 2$\theta$ was take as $I_{total}$. The DA value was then calculated using the following Formula 2.

Formula 2:

$$DA \text{ (Degree of Alignment)} = (I_b/I_{total}) \times 100$$

Table 1:

| Distinction | DA Value of First Positive Electrode Active Material Layer ($DA_1$) | DA Value of Second Positive Electrode Active Material Layer ($DA_2$) |
|---|---|---|
| Example 1 | 15.6 | 52.2 |
| Example2 | 15.4 | 54.0 |
| Comparative Example 1 | 15.0 | - |
| Comparative Example 2 | - | 45.1 |
| Comparative Example 3 | 15.4 | 45.9 |

**Evaluation Example 2: Evaluation of Electrical Characteristics**

The ionic conductivity and electrical conductivity of the rechargeable lithium batteries manufactured in Examples 1 and 2, and Comparative Examples 1 to 3 were measured to evaluate their electrical properties.

For example, the rechargeable lithium battery was charged and discharged twice at 0.1 C, and then completely discharged to 2.75 V at 0.1 C. Ion conductivity and electrical conductivity of the positive electrode obtained by disassembling the rechargeable lithium battery were measured using Electrochemical Impedance Spectroscopy (EIS). At this time, the measurement conditions of EIS were set to an amplitude of 10 mV and a frequency range of 10 MHz to 1 MHz.

Table 2:

| Distinction | Ion conductivity (S/cm) | Electrical conductivity (S/cm) |
|---|---|---|
| Example 1 | 0.13 | 0.45 |
| Example2 | 0.15 | 0.58 |
| Comparative Example 1 | 0.09 | 0.21 |
| Comparative Example 2 | 0.09 | 0.30 |
| Comparative Example 3 | 0.08 | 0.21 |

As shown in Table 2, the positive electrodes for a rechargeable lithium battery of Examples 1 and 2 were superior to, or improved compared to, Comparative Examples 1 to 3 in both ionic conductivity and electrical conductivity.

**Evaluation Example 3: Evaluation of Charge-Discharge Characteristics**

The charge and discharge characteristics of the rechargeable lithium batteries manufactured in Examples 1 and 2, and Comparative Examples 1 to 3 were evaluated by performing charge and discharge cycles.

For example, the rechargeable lithium battery was placed in a 45° C constant temperature chamber and subjected to charge and discharge cycles in CC mode. During the process, the battery was charged at a constant current (CC) of 0.2C with a cutoff voltage of 4.25V, followed by constant voltage (CV) charging with a cutoff current of a 0.05C. The discharge was then performed at a constant current of 0.2C with a cutoff voltage of 2.8V.

After one charge-discharge cycle, the discharge condition was maintained at a constant current of 0.2C and a cutoff voltage of 2.8V, while the charge condition was modified by changing the C-rate to 0.5C, 1.0C, and 2.0C, with a cutoff voltage of 4.25V and constant voltage charging with a cutoff current of 0.05C. Based on the measurement results, the ratio of the charge capacity at each C-rate to the charge capacity at 0.2C for one cycle was calculated.

Table 3:

| Distinction | Charge amount/single charge amount (%) | | | |
|---|---|---|---|---|
| | 0.2C | 0.5C | 1.0C | 2.0C |
| Example 1 | 100 | 98.7 | 96.3 | 92.8 |
| Example 2 | 100 | 98.7 | 97.1 | 94.2 |
| Comparative Example 1 | 100 | 97.6 | 94.0 | 80.4 |
| Comparative Example 2 | 100 | 97.8 | 95.1 | 83.0 |
| Comparative Example 3 | 100 | 97.3 | 94.7 | 74.2 |

As shown in Table 3, the rechargeable lithium batteries of Examples 1 and 2 exhibited improved ionic conductivity and charging efficiency. Consequently, compared to Comparative Examples 1 to 3, Examples 1 and 2 did not experience overvoltage or capacity degradation during repeated charge and discharge cycles. Additionally, the capacity characteristics and the charge capacity ratio according to the C-rate were also desired or improved.

The positive electrode for a rechargeable lithium battery according to the example embodiments of the present disclosure can improve ion conductivity by controlling the DA value of the first positive electrode active material layer and the DA value of the second positive electrode active material layer. By coating the second positive electrode active material or providing a coating layer with paramagnetic or diamagnetic properties on the surface of the second positive electrode active material, the vertical alignment of the second positive electrode active material layer can be increased. This not only improves the lithium-ion conductivity of the positive electrode according to the present disclosure, but also enhances the capacity characteristics and fast-charging performance of the battery.

While this disclosure has been described in connection with what is presently considered to be example embodiments, it is to be understood that the present disclosure may be not limited to the disclosed embodiments, and is intended to cover various modifications and equivalent arrangements included within the spirit and scope of the appended claims, and therefore the aforementioned embodiments should be understood to be examples but not limiting this disclosure in any way.

**Claims**

1.  A positive electrode (10) for a rechargeable lithium battery (100), the positive electrode (10) comprising:

    a positive electrode current collector (COL1); and
    a positive electrode active material layer (AML1) disposed on at least one surface of the positive electrode current collector (COL1),
    wherein the positive electrode active material layer (AML1) includes a first positive electrode active material layer (CAL1) in contact with the positive electrode current collector and a second positive electrode active material layer (CAL2) disposed on the first positive electrode active material layer,
    the first positive electrode active material layer comprises a first positive electrode active material and a first binder, the first positive electrode active material including nickel,
    the second positive electrode active material layer comprises a second positive electrode active material and a second binder, and
    the positive electrode (10) satisfies Formula 1 below and has a value of $DA_2$ below in a range of $\geq 48$ to $\leq 60$,

$$\text{Formula 1:}$$

$$DA_2 > DA_1;$$

    wherein, in Formula 1, $DA_1$ is a DA (Degree of Alignment) value of the first positive electrode active material layer, $DA_2$ is a DA value of the second positive electrode active material, and $DA_1$ and $DA_2$ are each calculated in accordance with Formula 2 below,

Formula 2:

$$DA \text{ (Degree of Alignment)} = (I_b/I_{total}) \times 100;$$

wherein, in Formula 2:

$I_b$ is a sum of peak intensities observed along b-axis, which corresponds to a crystal direction for lithium-ion movement, measured using CuKα radiation during XRD analysis; and
$I_{total}$ is a sum of peak intensities observed in 2θ range from 10° to 65°, measured using CuKα radiation during XRD analysis.

2. The positive electrode (10) as claimed in claim 1, wherein the $DA_1$ is in a range of ≥ 10 to ≤ 20, and wherein a ratio of $DA_1$ to $DA_2$ is in a range of about 1 : 3 to about 1 : 4.5.

3. The positive electrode (10) as claimed in claim 1 or 2, wherein a thickness ratio of the first positive electrode active material layer (CAL1) to the second positive electrode active material layer (CAL2) is in a range of about 1 : 10 to about 10 : 1.

4. The positive electrode (10) as claimed in any one of claims 1 to 3, wherein the second positive electrode active material has a surface that is coated by a coating process.

5. The positive electrode (10) as claimed in any one of claims 1 to 4, wherein the second positive electrode active material has a surface that is coated by a coating process and wherein the coating process comprises at least one of carbon coating, metal oxide coating, metal fluoride coating, solid electrolyte coating, plasma treatment, doping treatment, and a combination thereof.

6. The positive electrode (10) as claimed in any one of claims 1 to 5, wherein the second positive electrode active material comprises a coating layer on a surface thereof,

wherein the coating layer exhibits paramagnetic or diamagnetic properties,
wherein the coating layer comprises at least one of Al, Zn, Ti, Mg, Zr, graphite, and combinations thereof, and
wherein a thickness of the coating layer is in a range of ≥ 1 nm to ≤ 5 μm.

7. The positive electrode (10) as claimed in any one of claims 1 to 6, wherein the second positive electrode active material layer (CAL2) comprises a first surface configured to be exposed to an electrolyte, and a charge transfer resistance value of the first surface is in a range of ≥ 0.01 Ω to ≤ 0.025 Ω.

8. The positive electrode (10) as claimed in any one of claims 1 to 7, wherein the first positive electrode active material comprises at least one of a lithium nickel-based oxide, a cobalt-free nickel-manganese-based oxide, and a combination thereof, and wherein the second positive electrode active material comprises at least one of a lithium cobalt-based oxide, a lithium manganese-based oxide, or a lithium iron phosphate compound, and a combination thereof.

9. The positive electrode (10) as claimed in any one of claims 1 to 8, wherein the first positive electrode active material comprises a material that is different from the second positive electrode active material.

10. The positive electrode (10) as claimed in any one of claims 1 to 9, wherein the first positive electrode active material comprises a positive electrode active material A including nickel, and a positive electrode active material B including a lithium iron phosphate compound, and wherein a weight ratio of the positive electrode active material A to the positive electrode active material B is in a range of about 1 : 10 to about 10 : 1.

11. The positive electrode (10) as claimed in claim any one of claims 1 to 10, wherein the first positive electrode active material comprising the positive electrode active material A, wherein the positive electrode active material A comprises nickel in an amount in a range of about 50 at% or more, relative to 100 at% of transition metals in the positive electrode active material A.

12. The positive electrode (10) as claimed in any one of claims 1 to 11, wherein the first positive electrode active material comprises a positive electrode active material A, which includes lithium at least one of nickel cobalt aluminum oxide (NCA), lithium nickel cobalt manganese oxide (NCM), lithium nickel manganese oxide spinel (LNMO), or lithium nickel cobalt manganese aluminum oxide (NCMA), and a positive electrode active material B, which includes a lithium iron phosphate compound, and

    wherein the second positive electrode active material comprises a lithium iron phosphate compound.

13. The positive electrode (10) as claimed in any one of claims 1 to 12, wherein at least one of the first binder and the second binder comprises at least one of polyvinyl alcohol, carboxymethyl cellulose, hydroxypropyl cellulose, diacetyl cellulose, polyvinyl chloride, carboxylated polyvinylchloride, polyvinylfluoride, polyethyleneoxide, polyvinylpyrrolidone, polyurethane, polytetrafluoroethylene, polyvinylidene fluoride, polyethylene, polypropylene, butadiene rubber (BR), styrene-butadiene rubber (SBR), nitrile-butadiene rubber (NBR), carboxylated nitrile- butadiene rubber (XNBR), silicone rubber (SR), and a combination thereof.

14. The positive electrode (10) as claimed in any one of claims 1 to 13, wherein at least one of the first electrode active material layer and the second positive electrode active material layer (CAL2) further includes a conductive material, and

    wherein the conductive material comprises at least one of a carbon-based material, a metal-based material in a form of a metal powder or a metal fiber, a conductive polymer, or a mixture thereof.

15. A rechargeable lithium battery (100) comprising:

    the positive electrode (10) according to any one of claims 1 to 14; and
    a negative electrode (20).

# FIG. 1

ELL

COL1 AML1    30    COL2 AML2

10    20

# FIG. 2

# FIG. 3

EP 4 773 208 A1

# FIG. 4

# FIG. 5

# FIG. 6

# FIG. 7

**EUROPEAN SEARCH REPORT**

Application Number

EP 26 15 0122

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | CN 118 173 704 A (EVE POWER BATTERY CO LTD; EVE ENERGY CO LTD) 11 June 2024 (2024-06-11) * figure 1 * * paragraphs [0041] - [0043] * ----- | 1-15 | INV. H01M4/131 H01M4/136 H01M4/525 H01M4/58 |
| A | CN 116 111 040 A (ZHUHAI COSMX BATTERY CO LTD) 12 May 2023 (2023-05-12) * claims 1, 4 * ----- | 1-15 | |
| A | WO 2024/239152 A1 (CONTEMPORARY AMPEREX TECHNOLOGY CO LTD [CN]) 28 November 2024 (2024-11-28) * claims 1,6,11,13 * ----- | 1-15 | |
| A | CN 111 446 488 A (NINGDE CONTEMPORARY AMPEREX TECH CO LTD) 24 July 2020 (2020-07-24) * "Detailed Description - Secondary Battery" * ----- | 1-15 | |
| A | EP 4 213 246 B1 (CONTEMPORARY AMPEREX TECHNOLOGY CO LTD [CN] ET AL.) 6 November 2024 (2024-11-06) * claim 1 * ----- | 1-15 | TECHNICAL FIELDS SEARCHED (IPC) H01M |

The present search report has been drawn up for all claims

| Place of search | Date of completion of the search | Examiner |
|---|---|---|
| Munich | 29 April 2026 | Galbiati, Ivano |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

............................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 26 15 0122

This annex lists the patent family members relating to the patent documents cited in the above-mentioned European search report.
The members are as contained in the European Patent Office EDP file on
The European Patent Office is in no way liable for these particulars which are merely given for the purpose of information.

29-04-2026

| Patent document cited in search report | | Publication date | Patent family member(s) | | Publication date |
|---|---|---|---|---|---|
| CN 118173704 | A | 11-06-2024 | NONE | | |
| CN 116111040 | A | 12-05-2023 | CN | 116111040 A | 12-05-2023 |
| | | | WO | 2024160163 A1 | 08-08-2024 |
| WO 2024239152 | A1 | 28-11-2024 | CN | 119856294 A | 18-04-2025 |
| | | | EP | 4654288 A1 | 26-11-2025 |
| | | | US | 2025372610 A1 | 04-12-2025 |
| | | | WO | 2024239152 A1 | 28-11-2024 |
| CN 111446488 | A | 24-07-2020 | NONE | | |
| EP 4213246 | B1 | 06-11-2024 | CN | 116762192 A | 15-09-2023 |
| | | | EP | 4213246 A1 | 19-07-2023 |
| | | | HU | E069890 T2 | 28-04-2025 |
| | | | US | 2023170472 A1 | 01-06-2023 |
| | | | WO | 2023097454 A1 | 08-06-2023 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020250001400